(19) **Europäisches Patentamt / European Patent Office / Office européen des brevets**

(11) **EP 2 313 748 B1**

(12) **FASCICULE DE BREVET EUROPEEN**

(45) Date de publication et mention de la délivrance du brevet:
**03.09.2014 Bulletin 2014/36**

(21) Numéro de dépôt: **09772660.8**

(22) Date de dépôt: **19.06.2009**

(51) Int Cl.:
*B01L 3/02* (2006.01)     *B01L 3/00* (2006.01)
*G01F 1/56* (2006.01)     *G01F 1/64* (2006.01)

(86) Numéro de dépôt international:
**PCT/FR2009/000743**

(87) Numéro de publication internationale:
**WO 2010/000977 (07.01.2010 Gazette 2010/01)**

(54) **PROCEDE DE MESURE DU DEBIT D'UN LIQUIDE EN ECOULEMENT DANS UN CANAL FLUIDIQUE ET DISPOSITIF DE MISE EN OEUVRE**

VERFAHREN ZUR MESSUNG DER FLUSSGESCHWINDIGKEIT EINER IN EINEM FLUIDISCHEN KANAL FLIESSENDEN FLÜSSIGKEIT UND IMPLEMENTIERUNGSEINRICHTUNG

METHOD OF MEASURING THE FLOW RATE OF A LIQUID FLOWING IN A FLUIDIC CHANNEL AND IMPLEMENTATION DEVICE

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **02.07.2008 FR 0803761**

(43) Date de publication de la demande:
**27.04.2011 Bulletin 2011/17**

(73) Titulaires:
- **Commissariat à l'Énergie Atomique et aux Énergies Alternatives**
  **75015 Paris (FR)**
- **Centre National de la Recherche Scientifique**
  **75016 Paris (FR)**
- **Biomérieux**
  **69280 Marcy L'etoile (FR)**

(72) Inventeurs:
- **ACHARD, Jean-Luc**
  **F-38100 Grenoble (FR)**
- **JOLY, Pierre**
  **F-38100 Grenoble (FR)**
- **ROUX, Jean-Maxime**
  **F-38000 Grenoble (FR)**

(74) Mandataire: **Corret, Hélène et al Cabinet Orès**
  **36, rue de St Pétersbourg**
  **75008 Paris (FR)**

(56) Documents cités:
**EP-A- 1 754 957     WO-A-2005/026665**
**US-B1- 7 250 775**

**Description**

L'invention se rapporte à un procédé de mesure du débit d'un liquide en écoulement dans un canal fluidique de dimension transverse millimétrique à micrométrique et à un dispositif de mise en oeuvre.

En particulier, ce procédé est employé pour la mesure précise et visualisable de volumes liquides dans des protocoles de dosage de molécules chimiques ou biologiques.

Les procédés de dosage de molécules chimiques ou biologiques reposent, de façon générale, sur l'application de protocoles de mélange de réactifs chimiques ou biologiques en solution liquide, à des concentrations et dans un volume réactionnel bien définis. A titre d'exemple, dans le cas d'une révélation enzymatique telle qu'utilisée dans le procédé de test ELISA, la concentration du produit enzymatique que l'on doit mesurer est inversement proportionnelle au volume dans lequel a lieu la réaction. Les erreurs de mesures des volumes des différents réactifs utilisés ont donc un impact direct sur le résultat de la mesure.

De plus, dans le cas de dosages de molécules biologiques ou chimiques pour le diagnostic médical, il est avantageux, et de plus en plus nécessaire, de pouvoir certifier, pour chaque résultat de test, que le protocole biochimique réalisé pour obtenir ce résultat a bien été suivi. Cette traçabilité du déroulement du protocole impose de trouver des solutions pour mesurer avec précision les volumes de chacun des réactifs utilisés et de garantir qu'ils ont bien été dispensés dans le volume réactionnel.

Pour répondre à cette contrainte de maîtrise de la mesure de volume, il a été développé un vaste éventail de solutions techniques. Les solutions manuelles sont généralement basées sur la définition géométrique du volume de prélèvement ou de dispense (pipettes volumétriques, pipetteurs manuels ou motorisés, à volume fixe ou ajustable, pipetteurs à seringues, pipetteurs multi-canaux). Ces systèmes permettent généralement une mesure de volume reproductible, précise à condition que l'outil soit étalonné régulièrement, et à basse cadence.

Pour les systèmes automatisés, à plus haute cadence, le prélèvement et la dispense de volumes sont préférentiellement effectués par des systèmes très reproductibles, avec un contrôle régulier des volumes prélevés et dispensés par un système de mesure annexe. Le volume prélevé ou dispensé peut être mesuré dans le réservoir de prélèvement ou dans le réceptacle de dispense : pesée du contenant, contrôle de niveau dans le contenant par méthode optique, ou contacts électriques, ou mesure impédance-métrique.

Ces méthodes ont plusieurs inconvénients : elles atteignent difficilement de bonnes précisions pour les petits volumes (entre 10 et 100 $\mu$l), et sont sensibles à des phénomènes liés aux hautes cadences. On citera, entre autres, la perturbation du ménisque liquide à cause du mouvement du réceptacle ou de la violence de la dispense, la formation de bulles, l'inertie du réceptacle et du volume dispensé dans le cas de la mesure par pesée.

Une autre solution consiste à mesurer le volume prélevé ou dispensé par mesure du profil temporel du débit liquide dans l'outil de prélèvement.

De nombreux procédés ont été développés pour mesurer le débit de liquides en écoulement dans des tubes et canaux de tailles variables. Ces procédés relèvent de principes physiques variés : transfert thermique, mécanique, optique, ou électrique et, plus précisément, magnétohydrodynamique ou électrocinétique.

Les procédés thermiques, mécaniques et optiques ont l'avantage d'être indépendants de la conductivité électrique des liquides, qui peut être différente d'un liquide à l'autre. Ils ont, en revanche, l'inconvénient d'être techniquement complexe à réaliser.

De plus, de tels systèmes sont difficiles à miniaturiser. Pour des systèmes de prélèvement et de dispense de petits volumes, le liquide est prélevé généralement au fond d'un tube étroit ou d'un flacon à col étroit, et se trouve, une fois prélevé, dans l'extrémité effilée d'un cône ou d'une aiguille.

Les systèmes mécaniques, thermiques, ou optiques sont généralement trop encombrants pour pouvoir être placés directement à cet endroit et doivent donc être déportés, ce qui contraint à faire une mesure indirecte, via un piston liquide ou un piston d'air, du débit volumique en tête de dispositif.

Les procédés électriques dépendent fortement de la conductivité des solutions, mais ils sont les plus faciles à réaliser et à mettre en oeuvre, en particulier dans un format miniaturisé qui permettrait cette mise mettre en oeuvre au voisinage de l'extrémité libre du dispositif d'aspiration/refoulement de l'entrée de l'instrument de prélèvement.

Les procédés électrocinétiques sont associés aux mouvements d'un électrolyte dans une zone proche d'une surface solide. Un phénomène de double couche électrique est caractéristique de cette zone.

Ce phénomène de double couche électrique est expliqué dans l'article « Effets de la double couche électrique sur un écoulement de Poiseuille » de Lattes, C., Colin, S., Geoffroy, S., Baldas, L., dans La Houille Blanche, 1 (2006) pp. 47-52. Il peut se résumer de la façon suivante.

Lorsqu'un liquide conducteur, même très faiblement comme l'éthanol, est mis en contact avec une paroi solide comme celle d'un métal, d'un oxyde métallique, d'un semi-conducteur polarisé ou, enfin, des parois solides en carbone, graphite ou nanotubes de carbone, celle-ci acquiert, une charge électrique. Le métal peut être par exemple de l'or, du platine ou de l'acier inoxydable ; l'oxyde métallique peut être de l'ITO (« Indium Tin Oxyde » : oxyde d'indium-étain) ; le semi-conducteur peut être du silicium ou du diamant. On peut également mentionner des parois solides en carbone, graphite ou nanotubes de carbone. La charge de la paroi dépend notamment de l'ionisation donc du pH de la solution, et de la faculté d'adsorption à la paroi ou de dissolution dans le liquide des ions à l'interface paroi-liquide. Par exemple, dans le cas du silicium en contact avec de l'eau, la dissociation des molécules au niveau de la paroi produit une surface chargée négativement, suite à la réaction :

$$SiOH(\text{en surface}) + OH^- \rightleftarrows SiO^-(\text{en surface}) + H2O$$

Il en résulte une modification locale de la concentration ionique de la solution. La zone affectée par cette redistribution des charges dans le liquide est appelée la couche électrique. Le modèle de Stern est utilisé dans la plupart des études et présente cette couche comme une double couche électrique (DCE) comportant :

- une fine couche compacte (dite de Stern), d'épaisseur $x_H$, composée d'ions adsorbés à la surface de la paroi et alignés suivant un plan dit de « Stern », associée à
- une couche diffuse, dite de « Gouy-Chapmann », dans laquelle les ions sont mobiles.

Ainsi, des mouvements imposés mécaniquement ou résultant de champs électriques ne peuvent être observés que dans la couche diffuse de Gouy-Chapmann, mais pas dans la couche de Stern adjacente à la paroi car la convection y est toujours négligeable.

Les charges de surface de la paroi sont équilibrées par les charges adsorbées de la couche de Stern et par les charges de la couche diffuse, réalisant ainsi l'électroneutralité de l'ensemble. Cet état est appelé équilibre convecto-diffusif de charge (ECD) de la double couche électrique à l'interface de la paroi. Pour un couple liquide/paroi donné, il est caractéristique de l'écoulement. L'ECD dépend de la convection (qui opère dans le sens d'écoulement) et de la diffusion (qui opère perpendiculairement au sens d'écoulement).

La répartition des ions dans la solution crée un champ électrique dont l'effet s'atténue lorsque l'on s'éloigne de la paroi.

Le plan séparant la couche de Stern et la couche de Gouy-Chapmann est un plan de cisaillement. Le potentiel électrique au niveau de ce plan, caractéristique de l'ECD, est le potentiel zêta $\zeta$, encore appelé potentiel électrochimique ou électrocinétique.

L'épaisseur de la double couche électrique est définie par

$$\delta = \sqrt{\frac{\varepsilon \varepsilon_0 k_b T}{2 n_0 e^2 z^2}}$$

où $n_0$ est la concentration initiale, z la valence des ions, e la charge d'un électron, $k_b$ la constante de Boltzmann et T la température.

Selon Stern, à une distance égale à trois fois $\delta$, le potentiel électrique $\psi$ a diminué de 98% par rapport à sa valeur $\psi_0$ à la surface de l'électrode. Ainsi $\delta$ est caractéristique de l'épaisseur de la couche liquide dans laquelle la variation du potentiel électrique est significative.

Selon les propriétés du liquide, l'épaisseur $\delta$ de la double couche électrique varie de quelques nanomètres à un micromètre environ.

Collins, J. et Lee, A.P. ont proposé, dans leur article intitulé « Microfluidic flow transducer based on the measurement of electrical admittance », paru dans Lab on a Chip, 4 (2004) pp 7-10, et dans US 7250775 B1 un dispositif réalisant une mesure de la capacité formée entre deux électrodes nues placées transversalement par rapport à l'écoulement et entre lesquelles un potentiel est imposé de l'extérieur. L'écoulement modifie la valeur de cette capacité par son effet sur l'épaisseur de la double couche.

Ce premier dispositif présente l'inconvénient de dépendre du liquide dont on souhaite mesurer le débit puisque le courant mesuré est proportionnel à la conductivité du liquide. En outre, en appliquant un courant entre les électrodes, il y a un risque d'hydrolyser la solution.

Karin D. Caldwell et Marcus N. Myers ont proposé, dans leur article intitulé « Flowmeter Based on Measurement of Streaming Potentials », paru dans Anal. Chem., 58, (1986) pp 1583-1585, un dispositif réalisant une mesure du potentiel entre deux électrodes nues placées longitudinalement par rapport à un écoulement, c'est-à-dire en plaçant une électrode en amont de l'autre par rapport au sens d'écoulement du liquide. Ces électrodes sont placées dans un manchon qui doit être disposé longitudinalement, entre deux sections d'un canal, et qui est de diamètre supérieur à celui du canal.

Le potentiel qui apparaît est lié à l'entrainement des charges électriques mobiles d'une électrode à l'autre au sein du liquide. Ce potentiel d'écoulement (streaming potential) s'oppose au flux de la solution.

Ce deuxième dispositif présente également l'inconvénient de dépendre du liquide dont on souhaite mesurer le débit puisque la tension mesurée est inversement proportionnelle à la conductivité du liquide. En outre, il requiert de consacrer une certaine longueur pour intégrer le manchon de mesure dans le canal.

Un autre exemple est WO2005/026665, qui décrit un procédé de mesure de débit d'un liquide conducteur électrique en écoulement laminaire, selon une direction déterminée, dans un dispositif comprenant un canal fluidique de dimension transverse millimétrique à micrométrique et au moins une paire d'électrodes de mesure, une double couche électrique se formant à l'interface de chaque électrode avec le liquide conducteur, le procédé comprenant les étapes suivantes :

a) établir l'écoulement du liquide ;

b) mesurer une tension électrique entre les électrodes de ladite paire d'électrodes;

c) en déduire le débit du liquide.

La présente invention vise à pallier les inconvénients précédents et propose un procédé de mesure de débit et un dispositif de mesure de mise en oeuvre du procédé qui soient facile à mettre en oeuvre, simples à réaliser et suffisamment compacts pour être placés en entrée d'un système de prélèvement, directement en contact avec le liquide prélevé ou dispensé, et compatible avec des mesures de faibles volumes (à partir du microlitre).

De préférence, l'invention vise également à proposer un procédé de mesure de débit et un dispositif de mesure de mise en oeuvre dudit procédé, indépendants des caractéristiques physiques des liquides, pourvu que ceux-ci soient conducteurs.

A cette fin, l'invention a pour objet un procédé de mesure de débit d'un liquide conducteur électrique en écoulement laminaire, selon une direction déterminée, dans un dispositif comprenant un canal fluidique de dimension transverse millimétrique à micrométrique et au moins une paire d'électrodes de mesure, une double couche électrique se formant à l'interface de chaque électrode avec le liquide conducteur, le procédé comprenant les étapes suivantes :

a) établir l'écoulement du liquide ;

b) mesurer une tension électrique entre les électrodes de ladite paire d'électrodes ;

c) en déduire le débit du liquide,

le procédé différant des procédés connus en ce que les conditions hydrodynamiques, suivant la direction de l'écoulement, au voisinage d'une des électrodes, sont différentes des conditions hydrodynamiques, suivant la direction de l'écoulement, et au voisinage de l'autre électrode de ladite paire, afin que les champs de vitesses d'écoulement dans les couches diffuses en regard de chaque électrode soient différents, et que les équilibres convecto-diffusifs de charge de la double couche électrique à l'interface de chaque électrode soient différents.

Le débit du liquide suit une loi donnant le débit comme une fonction croissante de la tension ; loi obtenue soit par un processus d'étalonnage, soit par une modélisation des phénomènes électrocinétiques et hydrodynamiques couplés.

Par convention, les étapes du procédé suivant sont faites dans l'ordre alphabétique.

Selon d'autres modes de réalisation :

- le dispositif peut comprendre, en outre, une électrode de référence, l'étape b) consistant également à mesurer la tension entre l'une des électrodes de ladite paire d'électrodes de mesure et l'électrode de référence, et la tension entre l'autre électrode de ladite paire d'électrodes de mesure et l'électrode de référence, et l'étape c) consistant, en outre, à utiliser les tensions mesurées à l'étape b) pour en déduire le débit du liquide indépendamment de la conductivité du liquide ;
- le dispositif peut comprendre une seule paire d'électrode de mesure, au moins une des électrodes de ladite paire étant disposée sur un relief en saillie dans le canal ;
- le dispositif peut comprendre une seule paire d'électrodes de mesure, le canal du dispositif peut être muni d'un coude, et une des électrodes de ladite paire est disposée sur au moins une partie d'une surface d'écoulement interne du coude, l'autre électrode de ladite paire étant disposée sur au moins une partie d'une surface d'écoulement externe du coude ;
- le dispositif peut comprendre une seule paire d'électrode de mesure, et le canal du dispositif peut être muni d'au moins deux demi-coudes successifs, chaque électrodes de ladite paire étant disposée sur au moins une partie d'une surface d'écoulement externe de chaque demi-coude ;

- le dispositif peut comprendre une seule paire d'électrode de mesure et une structure d'accélération de l'écoulement du liquide en contact avec l'une des électrodes de ladite paire, par rapport à l'écoulement du liquide en contact avec l'autre électrode de ladite paire ;
- le dispositif peut comprendre une seule paire d'électrode de mesure et une structure de recirculation du liquide en contact avec l'une des électrodes de ladite paire, un écoulement direct étant maintenu au contact de l'autre électrode de ladite paire ; et/ou
- le procédé peut mettre en oeuvre au moins deux des procédés différents précédents.

L'invention se rapporte également à un dispositif de mesure du débit d'un liquide conducteur électrique en écoulement laminaire selon une direction déterminée, comprenant un canal, une paire d'électrodes de mesure, et au moins un dispositif de mesure de la tension entre les électrodes de ladite au moins une paire, une double couche électrique se formant à l'interface de chaque électrode avec le liquide conducteur, caractérisé en ce qu'il comprend des moyens agencés pour que, lorsque le liquide conducteur s'écoule dans le canal, les champs de vitesses d'écoulement dans les couches diffuses en regard de chaque électrode soient différents, afin que les équilibres convecto-diffusifs de charge de la double couche électrique à l'interface de chaque électrode soient différents.

En d'autres termes, l'évolution géométrique de la paroi, suivant l'axe de l'écoulement, au voisinage d'une des électrodes (concave, convexe, plane) est différente de l'évolution géométrique de la paroi, suivant l'axe de l'écoulement, au voisinage de l'autre électrode afin que les champs de vitesses, suivant l'axe de l'écoulement, dans les couches diffuses en regard de chaque électrode soient différentes et que, par conséquent, les équilibres convecto-diffusifs de charges réalisant l'électroneutralité soient différents.

Selon d'autres modes de réalisation :

- lesdits moyens peuvent être constitués par au moins un relief disposé à la surface du canal en contact avec le liquide et en saillie dans le canal ;
- l'une des électrodes de ladite paire peut être disposée sur une surface du relief, et l'autre électrode de ladite paire peut être disposée sur la surface du canal, en regard de la première électrode ;
- l'une des électrodes de ladite paire peut être disposée sur une face amont du relief par rapport à la direction d'écoulement du liquide, et l'autre électrode de ladite paire peut être disposée sur une face aval du relief par rapport à la direction d'écoulement du liquide ;
- les deux électrodes de ladite paire peuvent être identiques et être disposées chacune sur un relief, les deux reliefs étant de hauteurs différentes ;
- lesdits reliefs peuvent être disposés de telle sorte que les électrodes de ladite paire sont en regard l'une de l'autre ;
- lesdits reliefs peuvent être disposés de telle sorte que les électrodes de ladite paire sont alignées par rapport à la direction d'écoulement du liquide ;
- une électrode de référence peut être disposée sur une face du canal, en regard des électrodes de ladite paire disposées à la surface des deux reliefs, le dispositif comprenant, en outre, un dispositif de mesure de la tension entre l'une des électrodes de ladite paire et l'électrode de référence, et un dispositif de mesure de la tension entre l'autre électrode de ladite paire et l'électrode de référence ;
- le canal peut comprendre un coude présentant une surface d'écoulement interne sur au moins une partie de laquelle est disposée l'une des électrodes de ladite paire, et une surface d'écoulement externe sur au moins une partie de laquelle est disposée l'autre électrode de ladite paire ;
- le canal peut comprendre au moins deux demi-coudes successifs présentant chacun une surface d'écoulement externe sur au moins une partie de chacune desquelles est disposée une des électrodes de ladite paire ;
- une des électrodes de ladite paire peut être disposée à la surface d'une structure d'accélération apte à accélérer l'écoulement du liquide au voisinage de l'électrode par rapport à l'écoulement du liquide en contact avec l'autre électrode de ladite paire ;
- le canal peut comprendre une structure de recirculation du liquide apte à faire recirculer l'écoulement du liquide au voisinage de l'une des électrodes de ladite paire, l'autre électrode de ladite paire étant disposée dans une zone d'écoulement direct du liquide ;
- la structure de recirculation du liquide peut être constituée par un renfoncement disposé à la surface du canal ;
- la structure de recirculation du liquide peut être constituée par un élargissement brusque du canal ;
- les électrodes de ladite paire peuvent être espacées d'une distance comprise entre 3 et 1000 fois l'épaisseur de la double couche électrique ;
- le dispositif peut comprendre au moins deux dispositifs précédents différents.

L'invention se rapporte également à un dispositif d'aspiration/refoulement de liquide, du type aiguille ou cône, présentant une extrémité libre, et comprenant, au voisinage de son extrémité libre, un dispositif de mesure du débit d'un liquide conducteur précédent.

Le dispositif selon l'invention est plus simple que celui de Collins, J. et Lee, A.P. dans la mesure où un générateur de tension n'est pas requis. En outre il n'y a pas de risque d'hydrolyser la solution en appliquant un courant.

Le dispositif selon l'invention est compact et peut être localisé dans la section d'un canal, en contact direct avec le liquide conducteur prélevé ou dispensé, à la différence du dispositif de Karin D. Caldwell et Marcus N. Myers qui requiert de sacrifier la longueur de canal située entre les électrodes de mesure.

Le caractère compact du dispositif selon l'invention permet d'en intégrer plusieurs de structures différentes, et donc de fonctionnement différents, dans un même microsystème, afin de supprimer des lois d'estimation du débit certaines propriétés physiques du liquide comme la conductivité, la permittivité et le potentiel zêta.

En outre, il est possible de le ou les intégrer sur une puce électronique.

D'autres caractéristiques de l'invention seront énoncées dans la description détaillée ci-après faite en référence aux figures qui représentent, respectivement :

- les figures 1 à 4, une vue schématique en coupe longitudinale d'un dispositif selon quatre variantes d'un premier mode de réalisation dans lequel les électrodes d'une paire sont identiques et disposées sur des reliefs de hauteurs différentes ;
- la figure 5, une vue schématique en coupe longitudinale d'un dispositif selon un deuxième mode de réalisation dans lequel les électrodes d'une paire sont disposées sur deux faces d'un relief présentant des conditions hydrodynamiques différentes ;
- les figures 6 à 8, une vue schématique en coupe longitudinale d'un dispositif selon trois variantes d'un troisième mode de réalisation ne faisant pas partie de l'invention, dans lequel les électrodes d'une paire sont différentes et disposées sur des reliefs de hauteurs identiques ;
- les figures 9 et 10, une vue schématique en coupe longitudinale en vue de dessus d'un dispositif selon deux variantes d'un quatrième mode de réalisation dans lequel le canal présente un coude ;
- les figures 11 et 12, une vue schématique en coupe longitudinale en vue de dessus d'un dispositif selon deux variantes d'un cinquième mode de réalisation dans lequel le canal présente deux demi-coudes ;
- la figure 13, une vue schématique en coupe longitudinale d'un dispositif selon un sixième mode de réalisation dans lequel le canal présente une structure d'accélération ;
- les figures 14 et 15, une vue schématique en coupe longitudinale d'un dispositif selon deux variantes d'un septième mode de réalisation dans lequel le canal présente une structure de recirculation ;
- la figure 16, une vue schématique en coupe longitudinale d'un dispositif selon un huitième mode de réalisation dans lequel le canal présente un obstacle en amont de l'une des électrodes.

L'invention utilise le phénomène selon lequel l'équilibre convecto-diffusif de la répartition des charges de la double couche électrique est modifiée en fonction de l'écoulement de fluide soit sur une seule des deux électrodes, soit sur les deux électrodes, mais différemment d'une électrode à l'autre pour mesurer le débit d'un liquide conducteur électrique en écoulement, selon une direction déterminée, dans un canal fluidique de dimension transverse millimétrique à micrométrique.

Un premier mode de réalisation d'un dispositif de mise en oeuvre du procédé précédent consiste à prévoir un ou plusieurs reliefs de hauteurs différentes, saillants dans la lumière d'un canal d'écoulement de liquide, afin de modifier localement les conditions hydrodynamiques d'écoulement du liquide. Ainsi, les caractéristiques géométriques du canal, suivant l'axe de l'écoulement, au voisinage d'une des électrodes, sont différentes des caractéristiques géométriques du canal, suivant l'axe de l'écoulement, et au voisinage de l'autre électrode de ladite paire. De cette manière, les champs de vitesses d'écoulement dans les couches diffuses à l'interface de chaque électrode sont différents.

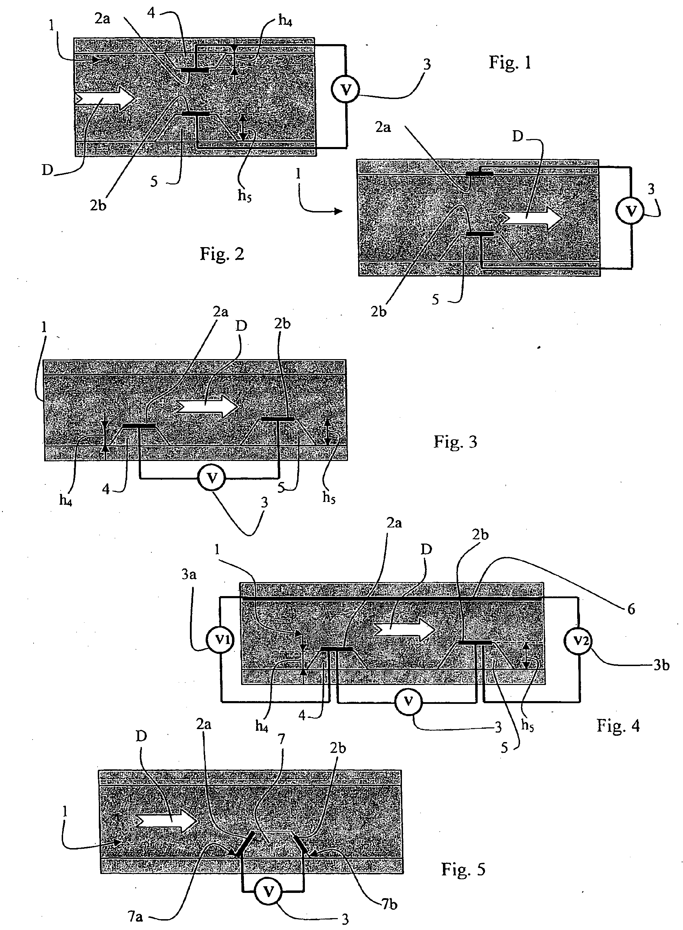

Une première variante de ce premier mode de réalisation d'un dispositif de mesure de débit selon l'invention est illustré en figure 1. Ce dispositif comprend un canal 1, une paire d'électrodes de mesure 2a-2b, et un dispositif 3 de mesure de la tension entre ces électrodes. Lorsque le liquide conducteur est en contact avec les électrodes, une double couche électrique de hauteur déterminée $\delta$ se forme à l'interface de chaque électrode.

Les électrodes 2a, 2b sont disposées en vis-à-vis, de part et d'autre du canal, chacune sur un relief 4, 5 disposé à la surface du canal 1 en contact avec le liquide et en saillie dans le canal. Alternativement, les reliefs peuvent être décalés angulairement selon un angle quelconque et ne sont pas nécessairement en regard l'un de l'autre.

Ces reliefs 4, 5 en saillie provoquent une modification de l'écoulement du liquide. Selon cette version du premier mode de réalisation représenté en figure 1, le relief 4 présente une hauteur $h_4$ inférieure à la hauteur $h_5$ du relief 5.

Les reliefs 4 et 5 provoquent une modification des conditions hydrodynamiques de l'écoulement dans le canal 1. La différence de hauteur entre les reliefs 4 et 5 engendre une différence de conditions hydrodynamiques de l'écoulement au contact des électrodes 2a et 2b. L'équilibre convecto-diffusif de la répartition des charges de la double couche électrique à l'interface de l'électrode 2a est, par conséquent, différent de l'équilibre convecto-diffusif de la répartition des charges de la double couche électrique à l'interface de l'électrode 2b. Par conséquent, le potentiel électrique de l'électrode 2a est différent du potentiel électrique de l'électrode 2b. Cette différence est mesurée par le dispositif 3 et permet de calculer le débit du liquide dans le canal suivant une loi donnant ce débit comme une fonction croissante de la tension. Cette loi est obtenue par un processus d'étalonnage, ou par une modélisation des phénomènes électrocinétiques et hydrodynamiques couplés.

Comme le montre la figure 2, la hauteur du relief 4 peut être nulle du moment que la hauteur du relief 5 est non nulle. Dans ce cas, l'une des électrodes 2b de la paire d'électrodes de mesure est disposée sur une surface du relief 5 sensiblement parallèlement à la direction d'écoulement D du liquide, et l'autre électrode 2a est disposée en regard de la première électrode 2b.

Selon une troisième variante du premier mode de réalisation selon l'invention, représentée en figure 3, les deux électrodes de mesure 2a et 2b sont identiques et sont disposées chacune sur un relief, respectivement 4 et 5, sensiblement parallèlement à la direction d'écoulement D du liquide. Les deux reliefs 4 et 5 sont de hauteurs, respectivement h4 et h5, différentes. Les conditions hydrodynamiques au voisinage de l'électrode 2a étant différentes des conditions hydrodynamiques au voisinage de l'électrode 2b puisque les reliefs sont de hauteurs différentes, l'écoulement du liquide modifie la structure de la double couche électrique à l'interface de chaque électrode 2a-2b. Le potentiel électrique de chaque électrode peut être mesuré par le dispositif de mesure 3, et cette différence de potentiel permet de mesurer le débit du liquide.

Sur la figure 3, le relief 4 est situé en amont par rapport au relief 5.

Dans la variante illustrée en figure 3, les reliefs 4 et 5 sont disposés de telle sorte que les électrodes sont alignées par rapport à la direction d'écoulement du liquide. Ainsi, les reliefs peuvent être décalés angulairement selon un angle quelconque tout en étant décalés longitudinalement.

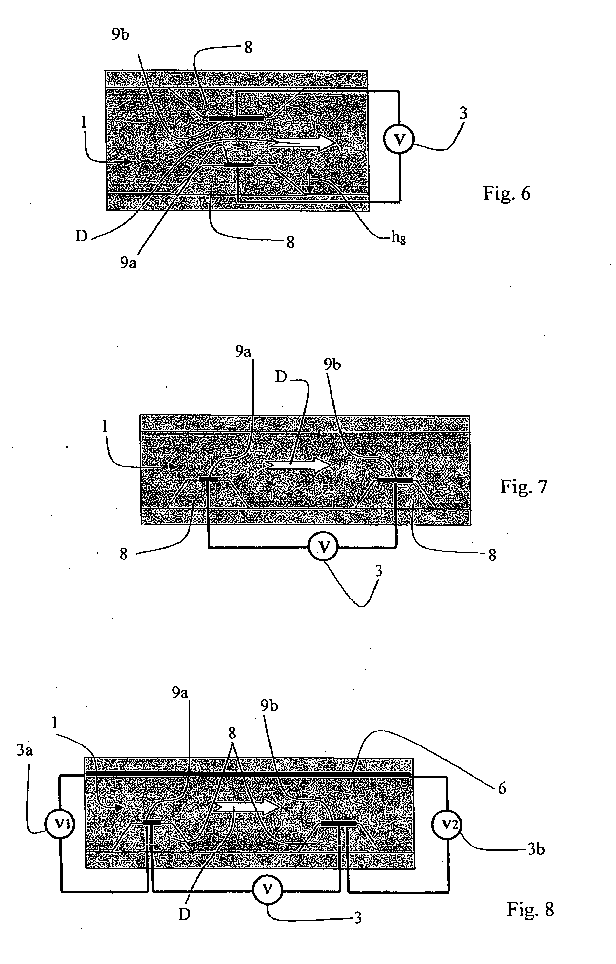

Afin de pouvoir mesurer le débit du liquide dans le canal indépendamment de la conductivité du liquide, le procédé selon l'invention peut mettre en oeuvre le dispositif selon la quatrième variante, illustrée en figure 4, ou la huitième variante, illustrée en figure 8.

Dans ce dispositif, une électrode de référence 6 est disposée à la surface du canal 1 en regard des électrodes de mesure 2a-2b disposées à la surface des deux reliefs 4 et 5. Le dispositif comprend, en outre, un dispositif 3a de mesure de la tension V1 entre l'électrode 2a et l'électrode de référence 6, et un dispositif 3b de mesure de la tension V2 entre l'électrode 2b et l'électrode de référence 6.

L'écoulement du liquide est alors établi au cours d'une étape a) du procédé de mesure. Une étape b) de mesure de tension consistant à mesurer la tension V1 entre l'une des électrodes de ladite paire d'électrodes de mesure et l'électrode de référence 6, et à mesurer la tension V2 entre l'autre électrode de ladite paire d'électrodes de mesure et l'électrode de référence 6.

Les tensions mesurées par les appareils de mesure 3, 3a et 3b permettent, au cours d'une étape c), de déduire le débit du liquide, indépendamment de la conductivité du liquide.

En effet, pour chaque tension V1 et V2, la loi (obtenue par un processus d'étalonnage, ou par une modélisation des phénomènes électrocinétiques et hydrodynamiques couplés) donne le débit comme une fonction croissante de la tension.

Dans chacune des lois tension/débit relative à chaque électrode, la tension est une fonction inversement proportionnelle de la conductivité du liquide. Cette dernière peut donc être éliminée en effectuant un rapport entre ces lois. On obtient ainsi une relation entre le débit et les deux tensions V1, V2 dans laquelle la conductivité ne figure pas.

Selon un deuxième mode de réalisation illustré en figure 5, le dispositif de mesure du débit comprend un canal 1, deux électrodes de mesure 2a-2b, de tailles différentes, disposées, respectivement, sur une face amont 7a et une face avale 7b d'un relief 7, par rapport à la direction d'écoulement D du liquide. Ainsi, les conditions hydrodynamiques (les champs de vitesses d'écoulement dans les couches diffuses) sont différentes au voisinage des deux électrodes 2a et 2b. Comme décrit précédemment, ces différences de conditions hydrodynamiques sont utilisées pour modifier l'équilibre convecto-diffusif de la répartition des charges de la double couche électrique à l'interface des électrodes 2a et 2b de manière différentes afin de mesurer une différence de potentiel entre ces deux électrodes et d'en déduire le débit du liquide.

Selon un troisième mode de réalisation, qui ne fait pas partie de l'invention, illustré en figure 6, les deux reliefs 8 utilisés sont de hauteur $h_8$ identique. La paire d'électrodes de mesure utilisée comprend deux électrodes 9a-9b de taille différente.

Selon la première variante du troisième mode de réalisation illustré en figure 7, les reliefs 8 sont disposés dans le canal de telle sorte que les électrodes qu'ils portent sont alignées par rapport à la direction d'écoulement D du liquide. Ils peuvent aussi être décalés angulairement

Comme illustré en figure 8, le dispositif précédent peut également comprendre une électrode de référence 6 disposée à la surface du canal 1 en regard des électrodes de mesure 9a-9b disposées à la surface des deux reliefs 8. Comme pour le dispositif illustré en figure 4, les différences de potentiel mesurées entre les électrodes 2a, 2b et 6, permettent de mesurer le débit indépendamment de la conductivité du liquide.

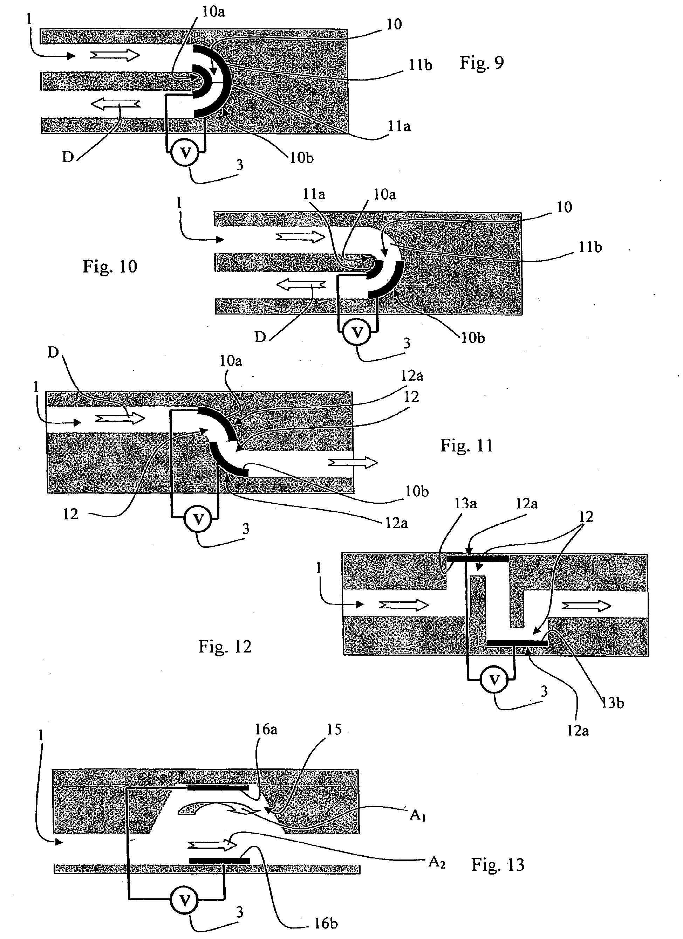

Un quatrième mode réalisation de l'invention, illustré en figures 9 et 10, consiste à prévoir un coude 10 dans le canal 1. Ce coude présente une surface d'écoulement interne 10a et une surface d'écoulement externe 10b. Sur la surface d'écoulement interne 10a est disposée une électrode de mesure 11a, et sur la surface d'écoulement externe 10b, est disposée une électrode de mesure 11b. Les conditions hydrodynamiques au niveau de la surface d'écoulement interne 10a du coude 10 étant différentes des conditions hydrodynamiques au niveau de la surface d'écoulement externe 10b, cette conformation entraîne une modification de la structure de la double couche électrique à l'interface de chaque électrode 11 a-11 b et, par voie de conséquence, modifie le potentiel électrique de chaque électrode. La différence de potentiel électrique entre les deux électrodes 11 a et 11 b est mesurée par le dispositif de mesure 3.

Selon une variante de ce quatrième mode de réalisation, représentée en figure 10, les électrodes de mesure 11 a et 11 b peuvent ne s'étendre que sur une partie seulement des surfaces d'écoulement, respectivement interne 10a et externe 10b, du coude 10.

Selon un cinquième mode de réalisation illustré en figures 11 et 12, un dispositif de mesure du débit selon l'invention comprend un canal muni de deux demi-coudes successifs 12. Des électrodes de mesure 13a-13b sont disposées sur au moins une partie de la surface d'écoulement externe 12a de chaque demi-coude 12.

Un sixième mode de réalisation d'un dispositif selon l'invention est illustré en figure 13. Ce dispositif comprend un canal 1 muni d'une structure 15 d'accélération de l'écoulement du liquide. Une électrode de mesure 16a est disposée dans cette structure d'accélération qui est apte à accélérer l'écoulement du liquide localement, c'est-à-dire au voisinage de l'électrode 16a. L'électrode 16b est disposée en vis-à-vis de l'électrode 16a dans une zone du canal où l'écoulement du liquide est constant. La disposition en en vis-à-vis n'est pas obligatoire.

L'accélération de l'écoulement du liquide (illustré par la flèche $A_1$), par rapport à l'écoulement constant du liquide (illustrée par la flèche $A_2$) implique une modification des conditions hydrodynamiques au contact de l'électrode 16a par rapport aux conditions hydrodynamiques au contact de l'électrode 16b, cette modification étant dépendante du débit du liquide. Il en découle que la structure de la double couche électrique de l'électrode 16a est différente de la structure de la double couche électrique de l'électrode 16b de sorte qu'une différence de potentiel peut être mesurée par l'appareil de mesure 3 entre les deux électrodes 16a-16b. La structure d'accélération du liquide permet donc de mesurer le débit d'écoulement du liquide.

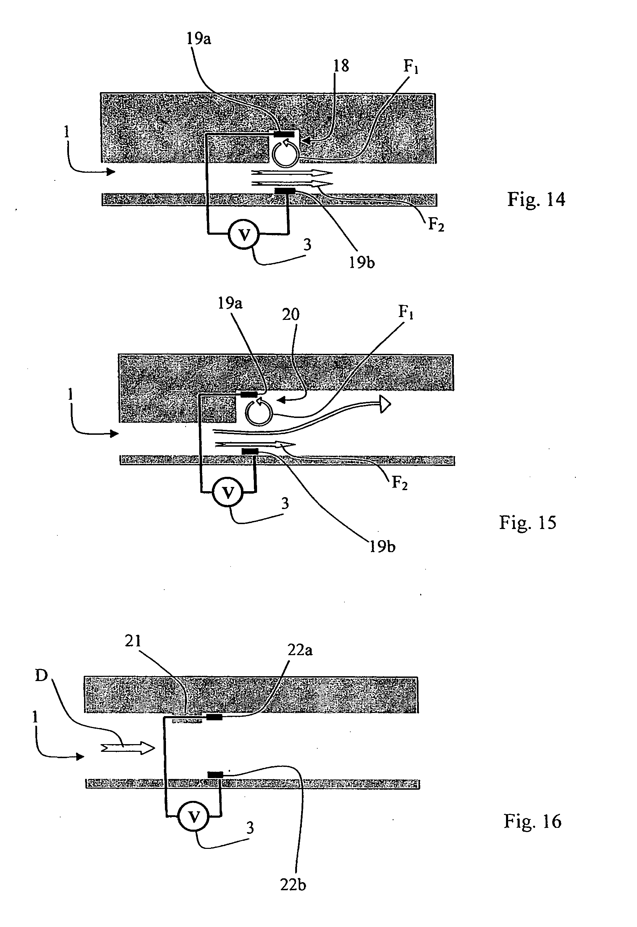

Un septième mode de réalisation d'un dispositif selon l'invention est illustré dans les figures 14 et 15 et 16. Selon ce septième mode de réalisation, un dispositif selon l'invention comprend un canal muni d'une structure de recirculation du liquide. Dans la figure 14, cette structure de recirculation du liquide est constituée par un renfoncement 18 disposé à la surface du canal 1. Une électrode de mesure 19a est disposée dans le fond du renfoncement 18 de telle sorte que lorsque le liquide circule dans le canal 1, une recirculation $F_1$ de l'écoulement du liquide s'effectue à la surface de l'électrode 19a. Une autre électrode de mesure 19b est disposée en regard de l'électrode 19a dans une zone d'écoulement direct $F_2$ du liquide.

Selon une autre variante illustrée à la figure 15, la structure de recirculation du liquide peut être constituée par un élargissement brusque 20 du canal 1.

Dans ces deux variantes du septième mode de réalisation, la recirculation du liquide au niveau de l'une seulement des électrodes de mesure et le maintien d'un écoulement direct au contact de l'autre seulement des électrodes de mesure ont pour conséquence d'établir une différence de conditions hydrodynamiques au voisinage des électrodes telles que les champs de vitesses d'écoulement à l'interface de chaque électrode sont différents. Ceci conduit à des structures différentes de la double couche électrique à l'interface de chacune de ces électrodes. Comme précédemment, la différence d'équilibre convecto-diffusif de la répartition des charges de la double couche électrique implique une tension mesurée par le dispositif 3. Le débit du fluide peut alors être déduit à partir de cette différence de potentiel.

Selon un huitième mode de réalisation illustré en figure 16, un dispositif de mesure de débit selon l'invention peut comprendre un obstacle 21 disposé en amont de l'une seulement des électrodes de mesure 22a-22b.

D'une manière plus générale, la disposition des reliefs peut être quelconque du moment que les conditions hydrodynamiques au voisinage des électrodes qu'ils supportent sont différentes. Ainsi, dans tous les modes de réalisations décrits précédemment, et dans leurs variantes, les électrodes de mesure de ladite au moins une paire d'électrodes sont espacées, de préférence, d'une distance comprise entre 3 et 1000 fois l'épaisseur $\delta$ de la double couche électrique et, de préférence, de l'ordre de 10 fois l'épaisseur $\delta$ de la double couche électrique. Celle-ci pouvant présenter une épaisseur comprise entre quelques nanomètres à un micromètre environ, la distance minimale entre deux électrodes est de l'ordre de quelques dizaines de nanomètres à dix micromètres environ.

Selon un mode de réalisation d'un dispositif de mesure selon l'invention, au moins deux dispositifs différents, parmi les huit modes de réalisations précédemment décrits et leurs variantes, sont disposés dans le canal. La mise en oeuvre de ce débitmètre permet de calculer le débit du liquide indépendamment des caractéristiques du liquide : conductivité, permittivité, potentiel zêta, densité, température. Si un couplage fluidique est effectué, deux dispositifs seront employés simultanément en parallèle ou en série.

Les dispositifs de mesure de débit peuvent, par exemple, être réalisés sur le silicium à l'aide des techniques de la microélectronique. Ainsi les dispositifs présentés dans les figures 9 à 16 peuvent être produits selon le procédé suivant :

- formation d'une couche épaisse d'oxyde de silicium $SiO_2$, d'environ $2\mu m$ ;
- dépôt puis gravure d'une fine couche, d'environ 300 nm, d'un métal tel que l'or ou le platine pour former les électrodes 10a, 10b, 13a, 13b, 16a, 16b, 19a, 19b, 22a, 22b ;
- dépôt puis gravure d'un film sec photosensible épais (quelques dizaines à centaines de micromètres) pour former les canaux microfluidiques ;
- collage par sérigraphie de colle d'un capot en polycarbonate ou verre sur le film sec.

Les dispositifs présentés sur les figures 1 à 8 comportent des reliefs qui pourraient être réalisés dans le silicium par gravure chimique, avec par exemple une solution KOH à 44%. Après cette étape de préparation du substrat dans lequel on forme les canaux avec les reliefs voulus, les étapes précédemment décrites pour la réalisation des électrodes puis des canaux microfluidiques peuvent être effectuées.

Avantageusement, un dispositif de mesure du débit d'un liquide conducteur précédent peut équiper l'extrémité libre d'un dispositif d'aspiration/refoulement de liquide, du type aiguille ou cône.

Selon d'autres modes de réalisation, les moyens agencés pour que les caractéristiques géométriques du canal au voisinage d'une des électrodes, soient différentes des caractéristiques géométriques du canal au voisinage de l'autre électrode de ladite paire sont des reliefs tels que les électrodes de chaque paire sont :

- ■ l'une concave, l'autre convexe,
- ■ l'une concave, l'autre plane,
- ■ l'une convexe, l'autre plane.

## Revendications

1. Procédé de mesure de débit d'un liquide conducteur électrique en écoulement laminaire, selon une direction déterminée (D), dans un dispositif comprenant un canal fluidique (1) de dimension transverse millimétrique à micrométrique et au moins une paire d'électrodes de mesure (2a-2b, 11 a-11 b, 16a-16b, 19a-19b, 22a-22b), une double couche électrique se formant à l'interface de chaque électrode avec le liquide conducteur, le procédé comprenant les étapes suivantes :

   a) établir l'écoulement du liquide ;
   b) mesurer une tension électrique (V) entre les électrodes de ladite paire d'électrodes ;
   c) en déduire le débit du liquide,
   **caractérisé en ce que** les conditions hydrodynamiques, suivant la direction de l'écoulement, au voisinage d'une (2a, 11a, 13a, 16a, 19a, 22a) des électrodes, sont différentes des conditions hydrodynamiques, suivant la direction de l'écoulement, et au voisinage de l'autre électrode (2b, 11 b, 13b, 16b, 19b, 22b) de ladite au moins une paire, afin que les champs de vitesses d'écoulement dans les couches diffuses en regard de chaque électrode soient différents, et que les équilibres convecto-diffusifs de charge de la double couche électrique à l'interface de chaque électrode soient différents,

2. Procédé selon la revendication 1, dans lequel le dispositif comprend, en outre, une électrode de référence (6), l'étape b) consistant également à mesurer la tension (V1) entre l'une (2ades électrodes de ladite paire d'électrodes de mesure et l'électrode de référence (6), et la tension (V2) entre l'autre électrode (2b) de ladite paire d'électrodes de mesure et l'électrode de référence (6), et l'étape c) consistant, en outre, à utiliser les tensions (V, V1, V2) mesurées à l'étape b) pour en déduire le débit du liquide indépendamment de la conductivité du liquide.

3. Procédé selon la revendication 1 ou 2, dans lequel le dispositif comprend une seule paire d'électrode de mesure (2a-2b), au moins une des électrodes (2a-2b) de ladite paire étant disposée sur un relief (4, 5, 7) en saillie dans le canal.

4. Procédé selon la revendication 1 ou 2, dans lequel le dispositif comprend une seule paire d'électrode de mesure (11a-11b), le canal du dispositif étant muni d'un coude (10), et une (11a) des électrodes de ladite paire est disposée sur au moins une partie d'une surface d'écoulement interne (10a) du coude (10), l'autre électrode (11 b) de ladite paire étant disposée sur au moins une partie d'une surface d'écoulement externe (10b) du coude (10).

5. Procédé selon la revendication 1 ou 2, dans lequel le dispositif comprend une seule paire d'électrode de mesure (13a-13b), et le canal du dispositif peut être muni d'au moins deux demi-coudes (12) successifs, chaque électrodes (13a-13b) de ladite paire étant disposée sur au moins une partie d'une surface d'écoulement externe (123a) de chaque demi-coude (12).

**6.** Procédé selon la revendication 1 ou 2, dans lequel le dispositif comprend une seule paire d'électrode de mesure (16a-16b) et une structure (15) d'accélération de l'écoulement (A1) du liquide en contact avec l'une (16a) des électrodes de ladite paire, par rapport à l'écoulement (A2) du liquide en contact avec l'autre électrode (16b) de ladite paire.

**7.** Procédé selon la revendication 1 ou 2, dans lequel le dispositif comprend une seule paire d'électrode de mesure (19a-19b) et une structure (18, 20) de recirculation (F1) du liquide en contact avec l'une (19a) des électrodes de ladite paire, un écoulement direct (F2) étant maintenu au contact de l'autre électrode (19b) de ladite paire.

**8.** Procédé selon l'une des revendications 1 ou 2, dans lequel le dispositif comprend au moins deux moyens différents pris dans le groupe constitué par un relief (4, 5, 7) en saillie, un coude (10), deux demi-coudes (12) successifs, une structure (15) d'accélération de l'écoulement (A1) du liquide et une structure (18, 20) de recirculation (F1) du liquide.

**9.** Dispositif de mesure du débit d'un liquide conducteur électrique en écoulement laminaire selon une direction déterminée (D), comprenant un canal (1), au moins une paire d'électrodes de mesure (2a-2b, 11a-11b, 13a-13b, 16a-16b, 19a-19b, 22a-22b), et au moins un dispositif (3) de mesure de la tension (V) entre les électrodes (2a-2b, 11a-11b, 13a-13b, 16a-16b, 19a-19b, 22a-22b) de ladite au moins une paire, une double couche électrique se formant à l'interface de chaque électrode avec le liquide conducteur, **caractérisé en ce qu'**il comprend des moyens (4, 5, 7, 10, 12, 15, 18, 20, 21) agencés pour établir, lorsque le liquide conducteur s'écoule dans le canal, des conditions hydrodynamiques différentes au voisinage de chaque électrode pour que les champs de vitesses d'écoulement dans les couches diffuses en regard de chaque électrode (2a-2b, 11 a-11 b, 13a-13b, 16a-16b, 19a-19b, 22a-22b) soient différents et que les équilibres convecto-diffusifs de charge de la double couche électrique à l'interface de chaque électrode soient différents.

**10.** Dispositif de mesure du débit selon la revendication 9, dans lequel lesdits moyens sont constitués par au moins un relief (4, 5, 7) disposé à la surface du canal (1) en contact avec le liquide et en saillie dans le canal.

**11.** Dispositif de mesure du débit selon la revendication 10, dans lequel l'une (2a) des électrodes de ladite paire est disposée sur une surface du relief (4, 5), et l'autre électrode (2b) de ladite paire est disposée sur la surface du canal (1), en regard de la première électrode (2a).

**12.** Dispositif de mesure du débit selon la revendication 10, dans lequel l'une (2a) des électrodes de ladite paire peut être disposée sur une face amont (7a) du relief (7) par rapport à la direction d'écoulement (D) du liquide, et l'autre électrode (2b) de ladite paire peut être disposée sur une face aval (7b) du relief (7) par rapport à la direction d'écoulement (D) du liquide.

**13.** Dispositif de mesure du débit selon la revendication 10, dans lequel les deux électrodes (2a-2b) de ladite paire sont identiques et sont disposées chacune sur un relief (4, 5), les deux reliefs (4, 5) étant de hauteurs (h4, h5) différentes.

**14.** Dispositif de mesure du débit selon la revendication 13, dans lequel lesdits reliefs (4, 5) sont disposés de telle sorte que les électrodes (2a-2b) de ladite paire sont en regard l'une de l'autre.

**15.** Dispositif de mesure du débit selon la revendication 13, dans lequel lesdits reliefs (4, 5) sont disposés de telle sorte que les électrodes (2a-2b) de ladite paire sont alignées par rapport à la direction d'écoulement (D) du liquide.

**16.** Dispositif de mesure du débit selon la revendication 13, dans lequel une électrode de référence (6) est disposée sur une face du canal (1), en regard des électrodes (2a-2b) de ladite paire disposées à la surface des deux reliefs (4, 5), le dispositif comprenant, en outre, un dispositif (3a) de mesure de la tension (V1) entre l'une des électrodes (2a) de ladite paire et l'électrode de référence (6), et un dispositif (3b) de mesure de la tension (V2) entre l'autre électrode (2b) de ladite paire et l'électrode de référence (6).

**17.** Dispositif de mesure du débit selon la revendication 9, dans lequel le canal comprend un coude (10) présentant une surface d'écoulement interne (10a) sur au moins une partie de laquelle est disposée l'une (11a) des électrodes de ladite paire, et une surface d'écoulement externe (10b) sur au moins une partie de laquelle est disposée l'autre électrode (11 b) de ladite paire.

**18.** Dispositif de mesure du débit selon la revendication 9, dans lequel le canal comprend au moins deux demi-coudes successifs (12) présentant chacun une surface d'écoulement externe (12a) sur au moins une partie de chacune desquelles est disposée une des électrodes (13a-13b) de ladite paire.

**19.** Dispositif de mesure du débit selon la revendication 9, dans lequel l'une des électrodes (16a) de ladite paire est disposée à la surface d'une structure d'accélération (15) apte à accélérer l'écoulement (A1) du liquide au voisinage de l'électrode (16a) par rapport à l'écoulement (A2) du liquide en contact avec l'autre électrode (16b) de ladite paire.

**20.** Dispositif de mesure du débit selon la revendication 9, dans lequel le canal comprend une structure de recirculation (18, 20) du liquide apte à faire recirculer l'écoulement (F1) du liquide au voisinage de l'une (19a) des électrodes de ladite paire, l'autre électrode (19b) de ladite paire étant disposée dans une zone d'écoulement direct (F2) du liquide.

**21.** Dispositif de mesure du débit selon la revendication 20, dans lequel la structure de recirculation du liquide est constituée par un renfoncement (18) disposé à la surface du canal (1).

**22.** Dispositif de mesure du débit selon la revendication 20, dans lequel la structure de recirculation du liquide est constituée par un élargissement brusque (20) du canal (1).

**23.** Dispositif de mesure du débit selon l'une quelconque des revendications 9 à 22, dans lequel les électrodes (2a-2b, 11a-11b, 13a-13b, 16a-16b, 19a-19b, 22a-22b) de ladite paire sont espacées d'une distance comprise entre 3 et 1000 fois l'épaisseur de la double couche électrique.

**24.** Dispositif de mesure du débit pour la mise en oeuvre du procédé selon la revendication 8, dans lequel le dispositif comprend au moins deux moyens différents pris dans le groupe constitué par un relief (4, 5, 7) en saillie, un coude (10), deux demi-coudes (12) successifs, une structure (15) d'accélération de l'écoulement (A1) du liquide et une structure (18, 20) de recirculation (F1) du liquide.

**25.** Dispositif d'aspiration/refoulement de liquide, du type aiguille ou cône présentant une extrémité libre, **caractérisé en ce qu'**il comprend, au voisinage de son extrémité libre, un dispositif de mesure du débit d'un liquide conducteur selon l'une des revendications 9 à 24.

**Patentansprüche**

**1.** Verfahren zur Messung eines Durchflusses einer elektrisch leitenden Flüssigkeit in laminarer Strömung entlang einer bestimmten Richtung (D) in einer Vorrichtung, welche einen Fluidkanal (1) mit der Abmessung im Millimeter- bis Mikrometerbereich und wenigstens ein Paar von Meßelektroden (2a-2b, 11a-11b, 16a-16b, 19a-19b, 22a-22b) umfasst, wobei sich eine elektrische Doppelschicht an der Grenzfläche jeder Elektrode mit der leitenden Flüssigkeit bildet, wobei das Verfahren die folgenden Schritte umfasst:

a) Herstellen der Strömung der Flüssigkeit;
b) Messen einer elektrischen Spannung (V) zwischen den Elektroden des Paares von Elektroden;
c) und daraus Ableiten des Durchflusses der Flüssigkeit,
**dadurch gekennzeichnet, dass** die hydrodynamischen Bedingungen entlang der Richtung der Strömung in Nachbarschaft einer (2a, 11a, 13a, 16a, 19a, 22a) der Elektroden unterschiedlich sind von den hydrodynamischen Bedingungen entlang der Richtung der Strömung und in Nachbarschaft der anderen Elektrode (2b, 11b, 13b, 16b, 19b, 22b) des wenigstens einen Paares, sodass die Strömungsgeschwindigkeitsfelder in den diffusen Schichten gegenüber jeder Elektrode unterschiedlich sind, und dass die Konvektion-Diffussion-Ladungsgleichgewichte der elektrischen Doppelschicht an der Grenzfläche jeder Elektrode unterschiedlich sind.

**2.** Verfahren nach Anspruch 1, wobei die Vorrichtung außerdem eine Referenzelektrode (6) umfasst, wobei der Schritt b) außerdem darin besteht, die Spannung (V1) zwischen der einen (2a) der Elektroden des Paares von Meßelektroden und der Referenzelektrode (6) und die Spannung (V2) zwischen der anderen Elektrode (2b) des Paares von Messelektroden und der Referenzelektrode (6) zu messen, und der Schritt c) außerdem darin besteht, die bei dem Schritt b) gemessenen Spannungen (V, V1, V2) zu nutzen, um daraus den Durchfluss der Flüssigkeit unabhängig von der Leitfähigkeit der Flüssigkeit abzuleiten.

**3.** Verfahren nach Anspruch 1 oder 2, wobei die Vorrichtung ein einziges Paar von Messelektroden (2a-2b) umfasst, wobei wenigstens eine der Elektroden (2a-2b) des Paares auf einem in dem Kanal hervorstehenden Relief (4, 5, 7) angeordnet ist.

4. Verfahren nach Anspruch 1 oder 2, wobei die Vorrichtung ein einziges Paar von Messelektroden (11a-11b) umfasst, wobei der Kanal der Vorrichtung mit einer Biegung (10) versehen ist, und wobei eine (11a) der Elektroden des Paares auf wenigstens einem Abschnitt einer inneren Strömungsfläche (10a) der Biegung (10) angeordnet ist , wobei die andere Elektrode (11b) des Paares auf wenigstens einem Abschnitt einer äußeren Strömungsfläche (10b) der Biegung (10) angeordnet ist.

5. Verfahren nach Anspruch 1 oder 2, wobei die Vorrichtung ein einziges Paar von Messelektroden (13a-13b) umfasst und der Kanal der Vorrichtung mit wenigstens zwei aufeinanderfolgenden Halbbiegungen (12) versehen sein kann, wobei jede Elektrode (13a-13b) des Paares auf wenigstens einem Abschnitt einer äußeren Strömungsfläche (123a) jeder Halbbiegung (12) angeordnet ist.

6. Verfahren nach Anspruch 1 oder 2, wobei die Vorrichtung ein einziges Paar von Meßelektroden (16a-16b) und eine Struktur (15) zur Beschleunigung der Strömung (A1) der Flüssigkeit im Kontakt mit der einen (16a) der Elektroden des Paares im Verhältnis zu der Strömung (A2) der Flüssigkeit im Kontakt mit der anderen Elektrode (16b) des Paares umfasst.

7. Verfahren nach Anspruch 1 oder 2, wobei die Vorrichtung ein einziges Paar von Messelektroden (19a-19b) und eine Struktur (18, 20) zur Rezirkulation (F1) der Flüssigkeit im Kontakt mit der einen (19a) der Elektroden des Paares umfasst, wobei im Kontakt mit der anderen Elektrode (19b) des Paares eine direkte Strömung (F2) beibehalten wird.

8. Verfahren nach einem der Ansprüche 1 oder 2, wobei die Vorrichtung wenigstens zwei unterschiedliche Mittel umfasst, welche enthalten sind in der Gruppe, die gebildet ist aus einem vorstehenden Relief (4, 5, 7), einer Biegung (10), zwei aufeineranderfolgenden Halbbiegungen (12), einer Struktur (15) zur Beschleunigung der Strömung (A1) der Flüssigkeit und einer Struktur (18, 20) zur Rezirkulation (F1) der Flüssigkeit.

9. Vorrichtung zur Messung des Durchflusses einer elektrisch leitenden Flüssigkeit in laminarer Strömung entlang einer bestimmten Richtung (D), umfassend einen Kanal (1), wenigstens ein Paar von Messelektroden (2a-2b, 11a-11b, 13a-13b, 15a-16b, 19a-19b, 22a-22b) und wenigstens eine Vorrichtung (3) zur Messung der Spannung (V) zwischen den Elektroden (2a-2b, 11a-11b, 13a-13b, 16a-16b, 19a-19b, 22a-22b) des wenigstens eine Paares, wobei sich eine elektrische Doppelschicht an der Grenzfläche jeder Elektrode mit der leitenden Flüssigkeit ausbildet, **dadurch gekennzeichnet, dass** sie Mittel (4, 5, 7, 10, 12, 15, 18, 20, 21) umfasst, welche ausgestaltet sind, wenn die leitende Flüssigkeit in dem Kanal strömt, unterschiedlich hydrodynamische Bedingungen in der Nachbarschaft jeder Elektrode herzustellen, sodass die Strömungsgeschwindigkeitsfelder in den diffusen Schichten gegenüber jeder Elektrode (2a-2b, 11a-11b, 13a-13b, 16a-16b, 19a-19b, 22a-22b) unterschiedlich sind, und dass die Konvektion-Diffussion-Ladungsgleichgewichte der elektrischen Doppelschicht an der Grenzfläche jeder Elektrode unterschiedlich sind.

10. Vorrichtung zur Messung des Durchflusses nach Anspruch 9, wobei die Mittel gebildet sind durch wenigstens ein Relief (4, 5, 7), welches an der Oberfläche des Kanals (1) in Kontakt mit der Flüssigkeit und in dem Kanal vorstehend angeordnet ist.

11. Vorrichtung zur Messung des Durchflusses nach Anspruch 10, wobei die eine (2a) der Elektroden des Paares auf einer Oberfläche des Reliefs (4, 5) angeordnet ist und die andere Elektrode (2b) des Paares auf der Oberfläche des Kanals (1), gegenüber der ersten Elektrode (2a) angeordnet ist.

12. Vorrichtung zur Messung des Durchflusses nach Anspruch 10, wobei die eine (2a) der Elektroden des Paares auf einer im Verhältnis zu der Strömungsrichtung (D) der Flüssigkeit vorgelagerten Seite (7a) des Reliefs (7) angeordnet sein kann, wobei die andere Elektrode (2b) des Paares auf einer im Verhältnis zu der Strömungsrichtung (D) der Flüssigkeit nachgelagerten Seite (7b) des Reliefs (7) angeordnet sein kann.

13. Vorrichtung zur Messung des Durchflusses nach Anspruch 10, wobei die zwei Elektroden (2a-2b) des Paares identisch sind und jeweils auf einem Relief (4, 5) angeordnet sind, wobei die zwei Reliefs (4, 5) unterschiedliche Höhen (H4, H5) aufweisen.

14. Vorrichtung zur Messung des Durchflusses nach Anspruch 13, wobei die Reliefs (4, 5) derart angeordnet sind, dass die Elektroden (2a-2b) des Paares einander gegenüber sind.

15. Vorrichtung zur Messung des Durchflusses nach Anspruch 13, wobei die Reliefs (4, 5) derart angeordnet sind, dass die Elektroden (2a-2b) des Paares im Verhältnis zu der Strömungsrichtung (D) der Flüssigkeit ausgerichtet sind.

16. Vorrichtung zur Messung des Durchflusses nach Anspruch 13, wobei eine Referenzelektrode (6) angeordnet ist auf einer Seite des Kanals (1), gegenüber den Elektroden (2a-2b) des Paares, welche auf der Oberfläche der zwei Reliefs (4, 5) angeordnet sind, wobei die Vorrichtung außerdem eine Vorrichtung (3a) zur Messung der Spannung (V1) zwischen der einen der Elektroden (2a) des Paares und der Referenzelektrode (6) und eine Vorrichtung (3b) zur Messung der Spannung (V2) zwischen der anderen Elektrode (2b) des Paares und der Referenzelektrode (6) umfasst.

17. Vorrichtung zur Messung des Durchflusses nach Anspruch 9, wobei der Kanal eine Biegung (10) umfasst, welche eine innere Strömungsfläche (10a) auf wenigstens einem Abschnitt von welcher die eine (11a) der Elektroden des Paares angeordnet ist, und eine äußere Strömungsfläche (10b) aufweist, auf wenigstens einem Abschnitt von welcher die andere Elektrode (11b) des Paares angeordnet ist.

18. Vorrichtung zur Messung des Durchflusses nach Anspruch 9, wobei der Kanal wenigstens zwei aufeineranderfolgende Halbbiegungen (12) umfasst, welche jeweils eine äußere Strömungsfläche (12a) aufweisen, auf wenigstens einem Abschnitt von jeder von welchen eine der Elektroden (13a-13b) des Paares angeordnet ist.

19. Vorrichtung zur Messung des Durchflusses nach Anspruch 9, wobei die eine der Elektroden (16a) des Paares an der Oberfläche einer Beschleunigungsstruktur (15) angeordnet ist, welche dazu ausgestaltet ist, die Strömung (A1) der Flüssigkeit in der Nachbarschaft der Elektrode (16a) im Verhältnis zu der Strömung (A2) der Flüssigkeit im Kontakt mit der anderen Elektrode (16b) des Paares zu beschleunigen.

20. Vorrichtung zur Messung des Durchflusses nach Anspruch 9, wobei der Kanal eine Struktur zur Rezirkulation (18, 20) der Flüssigkeit umfasst, welche dazu ausgestaltet ist, die Strömung (F1) der Flüssigkeit in der Nachbarschaft der einen (19a) der Elektroden des Paares rezirkulieren zu lassen, wobei die andere Elektrode (19b) des Paares in einem Bereich einer direkten Strömung (F2) der Flüssigkeit angeordnet ist.

21. Vorrichtung zur Messung des Durchflusses nach Anspruch 20, wobei die Struktur zur Rezirkulation der Flüssigkeit gebildet ist durch eine Vertiefung (18), welche an der Oberfläche des Kanals (1) angeordnet ist.

22. Vorrichtung zur Messung des Durchflusses nach Anspruch 20, wobei die Struktur zur Rezirkulation der Flüssigkeit gebildet ist durch eine abrupte Erweiterung (20) des Kanals (1).

23. Vorrichtung zur Messung des Durchflusses nach einem der Ansprüche 9-22, wobei die Elektroden (2a-2b, 11a-11b, 13a-13b, 16a-16b, 19a-19b, 22a-22b) des Paares um einen Abstand beabstandet sind, welcher zwischen 3 und 1000 Mal der Stärke der elektrischen Doppelschicht enthalten ist.

24. Vorrichtung zur Messung des Durchflusses, zum Einsatz des Verfahrens nach Anspruch 8, wobei die Vorrichtung wenigstens zwei unterschiedliche Mittel umfasst, welche in der Gruppe enthalten sind, die gebildet ist aus einem vorstehenden Relief (4, 5, 7), einer Biegung (10), zwei aufeineranderfolgenden Halbbiegungen (12), einer Struktur (15) zur Beschleunigung der Strömung (A1) der Flüssigkeit und einer Struktur (18, 20) zur Rezirkulation (F1) der Flüssigkeit.

25. Vorrichtung zur Ansaugung/zum Ausstoß einer Flüssigkeit, vom Typ einer Nadel oder eines Konus mit einem freien Ende, **dadurch gekennzeichnet, dass** sie in der Nachbarschaft ihres freien Endes eine Vorrichtung zur Messung des Durchflusses einer leitenden Flüssigkeit nach einem der Ansprüche 9 bis 24 umfasst.

**Claims**

1. A method of measuring the flow rate of an electrically conductive liquid flowing in the laminar flow regime, along a defined direction (D), in a device comprising a fluidic channel (1) having a millimeter-to-micron-sized transverse dimension, and at least a pair of measurement electrodes (2a-2b, 11a-11b, 16a-16b, 19a-19b, 22a-22b), an electrical double layer forming at the interface of each electrode with the conductive liquid, the method comprising the following steps:

a) establishing the flow of the liquid;
b) measuring a voltage (V) between the electrodes of said pair of electrodes; and
c) deducing the flow rate of the liquid therefrom, **characterized in that** the hydrodynamic conditions, in the direction of the flow, next to one (2a, 11a, 13a, 16a, 19a, 22a) of the electrodes are different to the hydrodynamic conditions, in the direction of the flow, next to the other electrode (2b, 11b, 13b, 16b, 19b, 22b) of said at least a pair, so that the flow velocity fields in the diffuse layers facing each electrode are different, and so that the convective-diffusive charge equilibrium of the electrical double layer at the interface of each electrode is different.

2. The method as claimed in claim 1, in which the device furthermore comprises a reference electrode (6), step b) also consisting in measuring the voltage (V1) between one (2a) of the electrodes of said pair of measurement electrodes and the reference electrode (6), and the voltage (V2) between the other electrode (2b) of said pair of measurement electrodes and the reference electrode (6), and step c) furthermore consisting in musing the voltages (V, V1, V2) measured in step b) to deduce the flow rate of the liquid independently of the conductivity of the liquid.

3. The method as claimed in either of claims 1 and 2, in which the device comprises a single pair of measurement electrodes (2a-2b), at least one of the electrodes (2a-2b) of said pair being placed on a relief (4, 5, 7) that protrudes into the channel.

4. The method as claimed in either of claims 1 and 2, in which the device comprises a single pair of measurement electrodes (11a-11b), the channel of the device being provided with a bend (10), and one (11a) of the electrodes of said pair being placed on at least a part of an inner flow surface (10a) of the bend (10), the other electrode (11b) of said pair being placed on at least a part of an outer flow surface (10b) of the bend (10).

5. The method as claimed in either of claims 1 and 2, in which the device comprises a single pair of measurement electrodes (13a-13b), and the channel of the device may be provided with at least two successive half-bends (12), each electrode (13a-13b) of said pair being placed on at least a part of an outer flow surface (123a) of each half-bend (12).

6. The method as claimed in either of claim 1 and 2, in which the device comprises a single pair of measurement electrodes (26a-16b), and a structure (15) for accelerating the flow (A1) of the liquid in contact with one (16a) of the electrodes of said pair relative to the flow (A2) of the liquid in contact with the other electrode (16b) of said pair.

7. The method as claimed in either of claim 1 and 2, in which the device comprises a single pair of measurement electrodes (19a-19b) and a structure (18, 20) for recirculating (F1) the liquid in contact with one (19a) of the electrodes of said pair, a direct flow (F2) being maintained in contact with the other electrode (19b) of said pair.

8. The method as claimed in either one of claims 1 and 2, in which the device comprises at least two different means taken from the group consisting of a protruding relief (4, 5, 7), a bend (10), two successive half-bends (12), a structure (15) for accelerating the flow (A1) of the liquid and a structure (18, 20) for recirculating (F1) the liquid.

9. A device for measuring the flow rate of an electrically conductive liquid flowing in the laminar flow regime, along a defined direction (D), comprising a channel (1), at least a pair of measurement electrodes (2a-2b, 11a-11b, 13a-13b, 16a-16b, 19a-19b, 22a-22b), and at least one device (3) for measuring the voltage (V) between the electrodes (2a-2b, 11a-11b, 13a-13b, 16a-16b, 19a-19b, 22a-22b) of said at least one pair, an electrical double layer forming at the interface of each electrode with the conductive liquid, in which it comprises means (4, 5, 7, 10, 12, 15, 18, 20, 21) arranged to establish, when the conductive liquid flows in the channel, different hydrodynamic conditions next to each electrode so that the flow velocity fields in the diffuse layers facing each electrode (2a-2b, 11a-11b, 13a-13b, 16a-16b, 19a-19b, 22a-22b) are different, and that the convective-diffusive charge equilibrium of the electrical double layer at the interface of each electrode is different.

10. The flow rate measurement device as claimed in claim 9, in which the means consist of at least one relief (4, 5, 7) placed on the surface of the channel (1) in contact with the liquid and protruding into the channel.

11. The flow rate measurement device as claimed in claim 10, in which one (2a) of the electrodes of said pair is placed on a surface in relief (4, 5), and the other electrode (2b) of said pair is placed on the surface of the channel (1), facing the first electrode (2a).

**12.** The flow rate measurement device as claimed in claim 10, in which one (2a) of the electrodes of said pair may be placed on an upstream side (7a) of the relief (7) relative to the flow direction (D) of the liquid, and the other electrode (2b) of said pair may be placed on a downstream side (7b) of the relief (7) relative to the flow direction (D) of the liquid.

**13.** The flow rate measurement device as claimed in claim 10, in which the two electrodes (2a-2b) of said pair are identical and are each placed on a relief (4, 5), the two reliefs (4, 5) having different heights (h4, h5).

**14.** The flow rate measurement device as claimed in claim 13, in which said reliefs (4, 5) are placed so that the electrodes (2a-2b) of said pair are facing each other.

**15.** The flow rate measurement device as claimed in claim 13, in which said reliefs (4, 5) are placed so that the electrodes (2a-2b) of said pair are aligned relative to the flow direction (D) of the liquid.

**16.** The flow rate measurement device as claimed in claim 13, in which a reference electrode (6) is placed on one side of the channel (1), facing the electrodes (2a-2b) of said pair placed on the surface of two reliefs (4, 5), the device furthermore comprising a device (3a) for measuring the voltage (V1) between one of the electrodes (2a) of said pair and the reference electrode (6), and a device (3b) for measuring the voltage (V2) between the other electrode (2b) of said pair and the reference electrode (6).

**17.** The flow rate measurement device as claimed in claim 9, in which the channel comprises a bend (10) having an inner flow surface (10a) on at least a part of which is placed one (11a) of the electrodes of said pair, and a outer flow surface (10b) on at least a part of which is placed the other electrode (11b) of said pair.

**18.** The flow rate measurement device as claimed in claim 9, in which the channel comprises at least two successive half-bends (12) each having an outer flow surface (12a) on at least a part of each of which is placed one of the electrodes (13a-13b) of said pair.

**19.** The flow rate measurement device as claimed in claim 9, in which one of the electrodes (16a) of said pair is placed on the surface of an accelerating structure (15) capable of accelerating the flow (A1) of the liquid next to the electrode (16a) relative to the flow (A2) of the liquid in contact with the other electrode (16b) of said pair.

**20.** The flow rate measurement device as claimed in claim 9, in which the channel comprises a structure (18, 20) for recirculating the liquid, capable of making the flow (F1) of liquid recirculate next to one (19a) of the electrodes of said pair, the other electrode (19b) of said pair being placed in a region of direct flow (F2) of the liquid.

**21.** The flow rate measurement device as claimed in claim 20, in which the structure for recirculating the liquid consists of an indentation (18) in the surface of the channel (1).

**22.** The flow rate measurement device as claimed in claim 20, in which the structure for recirculating the liquid consists of an abrupt widening (20) of the channel (1).

**23.** The flow rate measurement device as claimed in any one of claims 9 to 22, in which the electrodes (2a-2b, 11a-11b, 13a-13b, 16a-16b, 19a-19b, 22a-22b) of said pair are separated by a distance of between 3 and 1000 times the thickness of the electrical double layer.

**24.** A flow rate measurement device for implementing the method as claimed in claim 8, in which the device comprises at least two different means taken from the group consisting of a protruding relief (4, 5, 7), a bend (10), two successive half-bends (12), a structure (15) for accelerating the flow (A1) of the liquid and a structure (18, 20) for recirculating (F1) the liquid.

**25.** A liquid aspirating/dispensing device, of needle or cone type, having a free end, **characterized in that** said device comprises, next to its free end, a device for measuring the flow rate of a conductive liquid as claimed in claims 9 to 24.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

Fig. 15

Fig. 16

## RÉFÉRENCES CITÉES DANS LA DESCRIPTION

**Documents brevets cités dans la description**

- US 7250775 B1

- WO 2005026665 A

**Littérature non-brevet citée dans la description**

- **LATTES, C. ; COLIN, S. ; GEOFFROY, S. ; BALD-AS, L.** Effets de la double couche électrique sur un écoulement de Poiseuille. *La Houille Blanche,* 2006, vol. 1, 47-52

- **COLLINS, J. ; LEE, A.P.** Microfluidic flow transducer based on the measurement of electrical admittance. *Lab on a Chip,* 2004, vol. 4, 7-10
- **KARIN D. CALDWELL ; MARCUS N. MYERS.** Flowmeter Based on Measurement of Streaming Potentials. *Anal. Chem.,* 1986, vol. 58, 1583-1585